(19) Europäisches Patentamt
European Patent Office
Office européen des brevets

(11) **EP 3 632 710 A1**

(12) **EUROPEAN PATENT APPLICATION**
published in accordance with Art. 153(4) EPC

(43) Date of publication:
**08.04.2020 Bulletin 2020/15**

(51) Int Cl.:
***B60C 19/00*** *(2006.01)*          ***G06F 17/50*** *(2006.01)*

(21) Application number: **18806124.6**

(86) International application number:
**PCT/JP2018/015673**

(22) Date of filing: **16.04.2018**

(87) International publication number:
**WO 2018/216398 (29.11.2018 Gazette 2018/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2017 JP 2017102487**

(71) Applicant: **TOYO TIRE CORPORATION Itami-shi, Hyogo 6640847 (JP)**

(72) Inventor: **NASHIO,Hiroshi Itami-shi Hyogo 664-0847 (JP)**

(74) Representative: **Sajda, Wolf E. et al Meissner Bolte Patentanwälte Rechtsanwälte Partnerschaft mbB Postfach 86 06 24 81633 München (DE)**

(54) **METHOD AND APPARATUS FOR ANALYZING FLUID AROUND TIRE**

(57)     A method for analyzing fluid around a tire that suppresses reduction in the quality of a computational mesh of a fluid analytic model and that suppresses deterioration in precision and failure of calculations regardless of what sort of groove deformations may occur. The method includes: a step (S100) in which a model (M2) in accordance with a tire finite element method is stored in memory (11), the model (M2) being such that a tire is represented by a plurality of elements and nodes, and having grooves (20) formed at a contact patch, and having groove space elements (30) arranged in groove spaces bounded by groove wall surfaces (21) that form the grooves (20); a step (S101) in which the model (M2) is made to simulate rolling pursuant to analytic conditions which include prescribed load, prescribed internal pressure, and prescribed rotational speed, and numeric operations for calculation of the deformation that would occur in accordance with the model due to contact with the road surface are carried out; a step (S102) in which time series data pertaining to displacements of node groups (P1, P2) including all nodes (P1) that constitute an exterior surface of the tire including the grooves thereon, and at least a portion of all nodes (P2) that constitute the groove space elements (30), is acquired from results of arithmetic operations for deformation in accordance with the model; and a step (S103) in which a fluid analytic model in which space around the tire which includes the exterior surface of the tire and the road surface is expressed as a plurality of computational mesh cells is used to perform arithmetic operations for fluid analysis in which arithmetic operations are carried out with respect to a physical quantity of fluid for each of the computational mesh cells as locations of the computational mesh cells are varied in such fashion that the node groups (P1, P2) in the time series data are made to serve as control points.

FIG. 8

```
            START
              │
  Store model M2 in accordance with tire finite      ── S100
  element methodthat has groove space elements
              │
       Analysis of rolling while                     ── S101
       in contact with the ground
              │
  Acquire time series data pertaining to             ── S102
  displacements of node groups including
  at least a portion of all nodes at
  groove space elements
              │
  Use fluid analytic model to perform                ── S103
  arithmetic operations for fluid analysis
  in which node groups in time series
  data are made to serve as control points
              │
             END
```

## Description

### TECHNICAL FIELD

The present invention relates to a method and apparatus for analyzing fluid around a tire.

### BACKGROUND ART

In recent years, simulations for analyzing fluid around tires have been proposed for the purpose of evaluating such aspects of performance as water shedding performance and performance with respect to noise such as may be caused by fluid (air, water, etc.) around tires.

As such a simulation method, a computerized model is employed to simulate the rolling of a tire over a road surface, at which time the physical quantity of fluid around the tire model is calculated, the physical quantity of fluid being used to evaluate aspects of performance such as performance with respect to water shedding and noise. As related art, Patent References Nos. 1 and 2 have been disclosed.

### PRIOR ART REFERENCES

### PATENT REFERENCES

Patent Reference No. 1: Japanese Patent Application Publication Kokai
JP 2013-216 269 A

Patent Reference No. 2: Japanese Patent Application Publication Kokai
JP 2012-6522 A

### SUMMARY OF THE INVENTION

### PROBLEM TO BE SOLVED BY THE INVENTION

To carry out a simulation, fluid domains that define the fluid must be established in correspondence to the shape of the contact patch at the tire being modeled. For this reason, structural calculations are carried out to acquire time series data for displacements occurring at nodes in the model as a result of tire deformation and rotation, this time series data being used for computational mesh cell deformations in the fluid analytic model to perform arithmetic operations for fluid analysis.

More specifically, structural calculations are carried out in which rolling is simulated at a finite element model of a tire having grooves at the tread to calculate the deformations that occur in the model due to contact with the road surface. The coordinates of all of the nodes that constitute the exterior surface of the tire including the grooves thereon are extracted at regular unit time intervals from the results of computations at the structural calculations.

Time series data for the displacements at the nodes is calculated from the coordinates of the nodes at the respective unit time intervals. The displacements of the nodes that constitute the exterior surface of the tire include displacements due to rotation of the tire and displacements due to deformation of grooves.

A fluid analytic model in which the space around the tire which includes the exterior surface of the tire and the road surface is expressed as a plurality of computational mesh cells is then used to perform arithmetic operations for fluid analysis in which arithmetic operations are carried out with respect to the physical quantity of fluid at each computational mesh cell as morphing processing is carried out by causing the locations of the computational mesh cells to be varied in such fashion that nodes in the time series data are made to serve as control points.

However, when carrying out processing in which only nodes at the exterior surface of the tire are used as control points for morphing processing during fluid analysis such as is described above, in situations in which there is complicated deformation of grooves this may prevent satisfactory generation of a spatial interpolation field for morphing processing, which may cause the quality of the computational mesh to deteriorate, and may cause the precision of fluid calculations to deteriorate, or may prevent establishment of fluid calculations such that the calculations fail.

The foregoing patent references make no mention of the fact that deformation of grooves may cause reduction in the quality of the fluid analytic computational mesh, may cause fluid analysis to fail, and so forth.

The present invention was conceived in view of such problems, it being an object thereof to provide a method and apparatus for analyzing fluid around a tire that suppresses reduction in the quality of a computational mesh of a fluid analytic model and that suppresses deterioration in precision and failure of calculations regardless of what sort of groove deformations may occur.

### MEANS FOR SOLVING THE PROBLEM

To achieve the foregoing object, the present invention employs means as described below.

In other words, according to the present invention, there is provided a method for analyzing fluid around a tire is a method executed by a computer, and comprising:

a step in which a model in accordance with a tire finite element method is stored in memory, the model in accordance with the tire finite element method being such that a tire is represented by a plurality of elements and nodes, and having grooves formed at a contact patch, and having groove space elements arranged in groove spaces bounded by groove wall surfaces that form the grooves;

a step in which the model in accordance with the tire finite element method is made to simulate rolling pursuant to analytic conditions which include prescribed load, prescribed internal pressure, and prescribed rotational speed, and numeric operations for calculation of the deformation that would occur in accordance with the model due to contact with the road surface are carried out;

a step in which time series data pertaining to displacements of node groups including all nodes that constitute an exterior surface of the tire including the grooves thereon, and at least a portion of all nodes that constitute the groove space elements, is acquired from results of arithmetic operations for deformation in accordance with the model; and

a step in which a fluid analytic model in which space around the tire which includes the exterior surface of the tire and the road surface is expressed as a plurality of computational mesh cells is used to perform arithmetic operations for fluid analysis in which arithmetic operations are carried out with respect to a physical quantity of fluid for each of the computational mesh cells as locations of the computational mesh cells are varied in such fashion that the node groups in the time series data are made to serve as control points.

By so doing, because it will be possible to cause not only all of the nodes that constitute the tire exterior surface but also node(s) for groove space element(s) to be utilized as control points for mesh morphing processing in which locations of computational mesh cells are varied, even where there is complex deformation of grooves of the sort such as would cause deterioration in the quality of the computational mesh were only nodes for groove walls used, it will be possible due to the fact that more control points are used to satisfactorily generate the spatial interpolation field and to prevent deterioration in the quality of the computational mesh for mesh morphing processing. This will therefore make it possible to suppress occurrence of situations in which fluid analysis quality deteriorates and calculations fail.

BRIEF DESCRIPTION OF THE DRAWINGS

FIG. 1    Block diagram showing an apparatus for analyzing fluid around a tire in accordance with the present invention.
FIG. 2A   Drawing showing a model in accordance with an ordinary tire finite element method.
FIG. 2B   Drawing showing a model in accordance with tire finite element method of present invention.
FIG. 3    Schematic drawing showing a cross-section of a groove at model in accordance with an ordinary tire finite element method, and a schematic drawing showing a cross-section of a groove at a model in accordance with tire finite element method that has groove space elements.
FIG. 4    Drawing to assist in description of analysis of rolling while in contact with the ground, and drawing showing only groove space elements.
FIG. 5    Drawing showing an exemplary model for analyzing fluid around a tire.
FIG. 6    Partial enlarged view of FIG. 5.
FIG. 7    Drawing to assist in description of mesh morphing processing.
FIG. 8    Flowchart showing a method for analyzing fluid associated with the present invention.
FIG. 9    Drawing showing computational mesh cells for groove spaces in model for analyzing fluid before occurrence of deformation.
FIG. 10   Drawing corresponding to FIG. 9 after occurrence of deformation for a situation in which groove space elements are not used.
FIG. 11   Drawing corresponding to FIG. 9 after occurrence of deformation for a situation in which groove space elements are used.

EMBODIMENTS FOR CARRYING OUT INVENTION

Below, an embodiment of the present invention is described with reference to the drawings.

Apparatus for Analyzing Fluid Around Tire

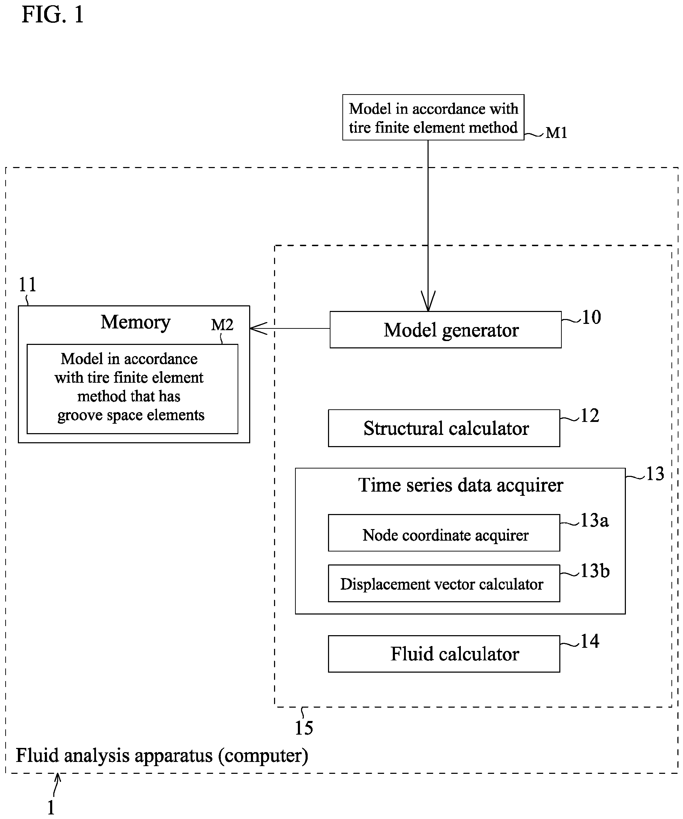

Fluid analysis apparatus 1 in accordance with the present embodiment is an apparatus that simulates the behavior of fluid around a tire. More specifically, as shown in FIG. 1, fluid analysis apparatus 1 has memory 11, structural calculator 12, time series data acquirer 13, and fluid calculator 14. Fluid analysis apparatus 1 may further have model generator 10.

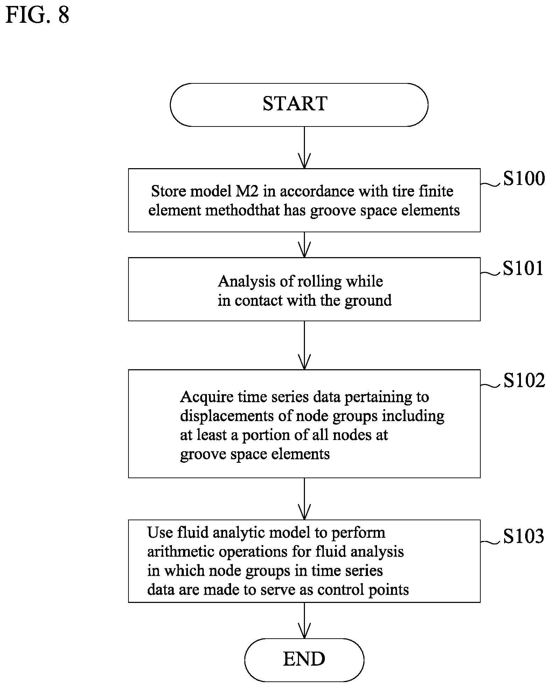

These respective units 11 through 14 are implemented in cooperative fashion in software and hardware as a result of execution of the processing routine at FIG. 8 which has been previously stored by processor(s) 15 at personal computer(s) and/or other such information processing apparatus(es) equipped with CPU(s) and/or other such processor(s) 15, memory or memories 11, various interface(s), and so forth.

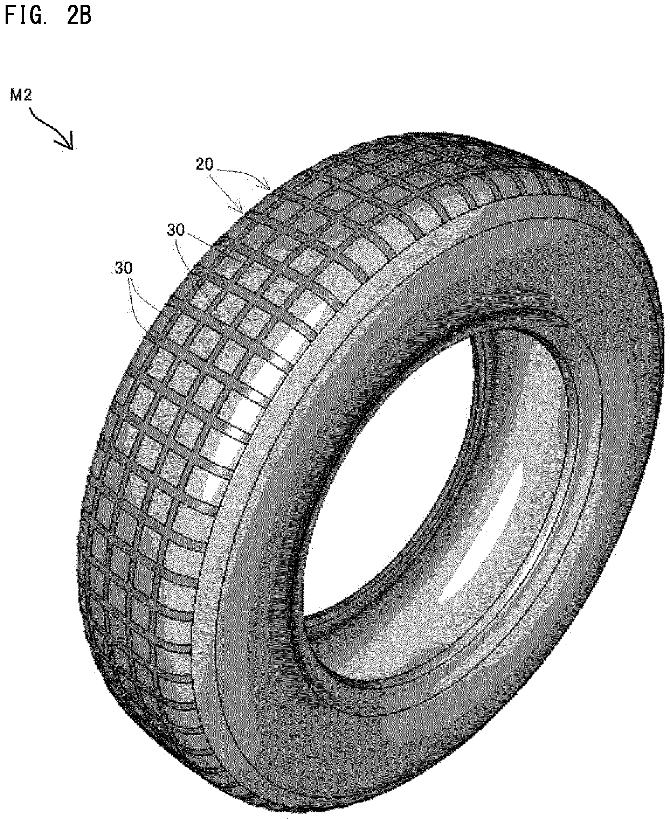

Memory 11 shown in FIG. 1 stores model M2 in accordance with a tire finite element method that has groove space elements employed in analysis of rolling while in contact with the ground. As shown in FIG. 2B, model M2 in accordance with a tire finite element method that has groove space elements, which is a model M2 in accordance with a tire finite element method in which a tire is represented by a plurality of elements and nodes, has grooves 20 formed at the contact patch, and has groove space elements 30 arranged in groove spaces bounded by groove wall surfaces that form grooves 20.

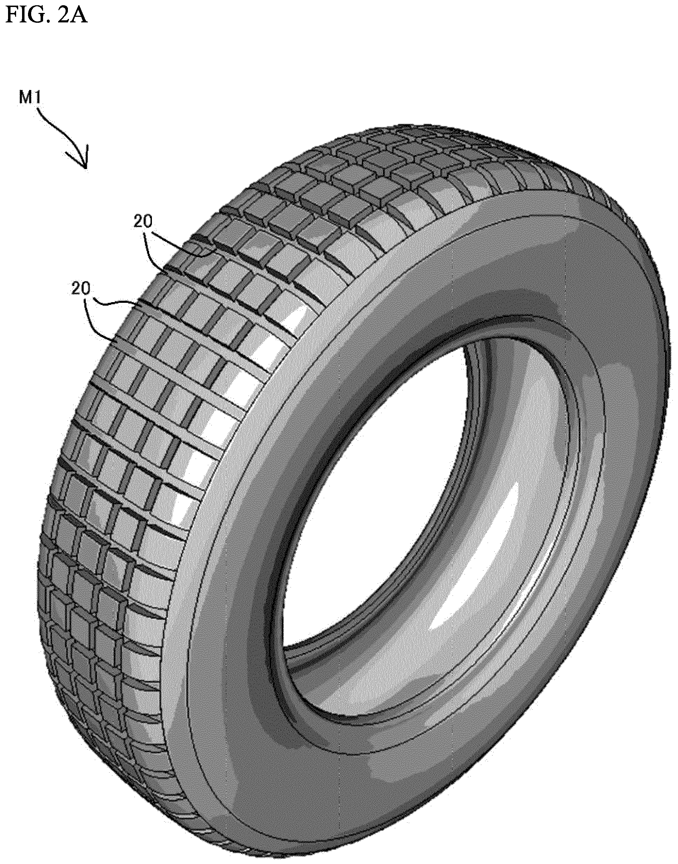

Groove space elements 30 are joined to the groove wall surfaces of grooves 20, being established in such fashion that they do not become detached therefrom despite occurrence of rolling. Model M2 in accordance with the tire finite element method that has groove space elements is a model in which groove space elements 30 have been provided at model M1 in accordance with the tire finite element method that has the tread pattern (grooves 20) shown in FIG. 2A.

It is often the case that a plurality of grooves 20 are present, including major groove(s) which extend in the tire circumferential direction, lateral groove(s) which intersect the tire circumferential direction, and so forth. Whereas groove space elements 30 are established at all of the grooves in the example shown in FIG. 2B, these need not be established at all grooves, it being sufficient that groove space elements 30 be established at some desired portion(s) of the grooves.

One such example that may be cited is the possibility of causing groove space elements 30 to be established only at lateral grooves which intersect the tire circumferential direction and which are not greater in width than some prescribed value (slits and/or sipes).

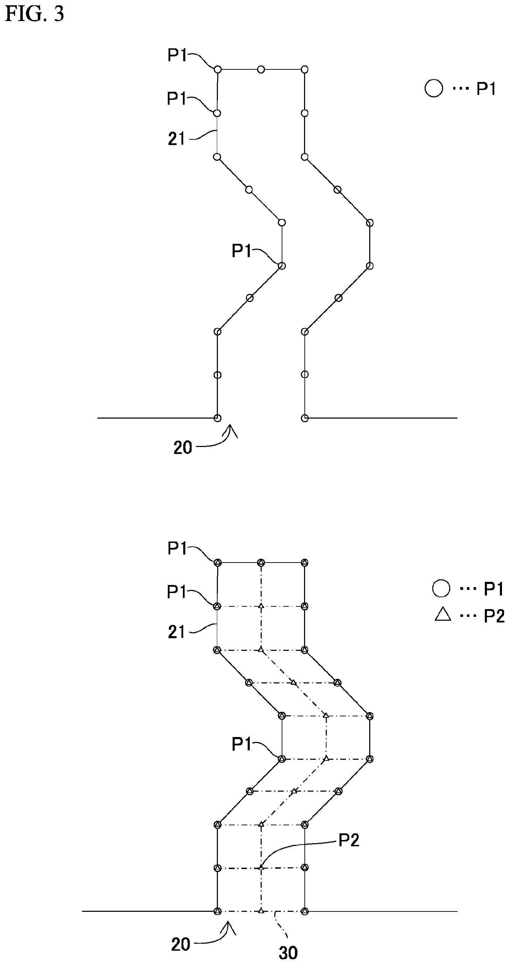

The upper portion of FIG. 3 is a schematic drawing showing a cross-section of a groove at a model M1 in accordance with a tire finite element method. Groove wall surfaces 21 forming groove 20 are represented by a plurality of nodes P1 (indicated by circles in the drawing). At FIG. 3, among the nodes P1 that constitute the exterior surface of the tire, note that only those nodes that constitute groove wall surfaces are shown in the drawing.

The lower portion of FIG. 3 is a schematic drawing showing a cross-section of a groove at a model M2 in accordance with a tire finite element method that has groove space elements. Groove space elements 30 are represented by a plurality of nodes P2 (indicated by triangles in the drawing). Nodes P1 which constitute the exterior surface of the tire (groove wall surfaces 21), and nodes P2 which constitute groove space elements 30, are established at the groove wall surfaces 21.

In accordance with the present embodiment, model generator 10 is provided. Model M1 in accordance with the ordinary tire finite element method shown in FIG. 2A is generated or is acquired from an external source, and model generator 10 thereafter causes groove space element(s) 30 to be inserted in prescribed groove(s) of model M1 in accordance with the tire finite element method to generate model M2 in accordance with the tire finite element method that has groove space element(s). Note that whereas model generator 10 is provided in the present embodiment, so long as model M2 in accordance with the tire finite element method that has groove space element(s) can be obtained, it is possible to omit model generator 10.

While the physical properties of groove space element(s) 30 can be established as desired, it is preferred that they be established as follows. Young's modulus of groove space elements 30 is chosen so as to be not less than 1/1000th but not greater than 1/10000th of the Young's modulus chosen for elements that form the contact patch, and Poisson's ratio of groove space elements 30 is chosen so as to be $0 \pm 0.01$.

If Young's modulus is low, because groove space elements will not impede deformation of grooves, it will be possible to reduce or eliminate the effect thereof on analysis of rolling and contact of the tire with the ground. But when Young's modulus is sufficiently low, there is little further benefit to be gained with respect to the non-impeding of groove deformation.

If this is made to be not greater than 1/1000th of that of the elements in the tread region that form the contact patch, the effect on precision will be so small that it can be ignored. Furthermore, regarding the reason that Poisson's ratio of the groove space elements is made to be $0 \pm 0.01$, when Poisson's ratio is 0, because volume simply varies in accompaniment to groove deformation, a Poisson's ratio of 0 is most preferred. Upon consideration of the level of strain which is obtained, it is thought that there will be no effect on precision if the error is made to be on the order of $\pm 0.01$.

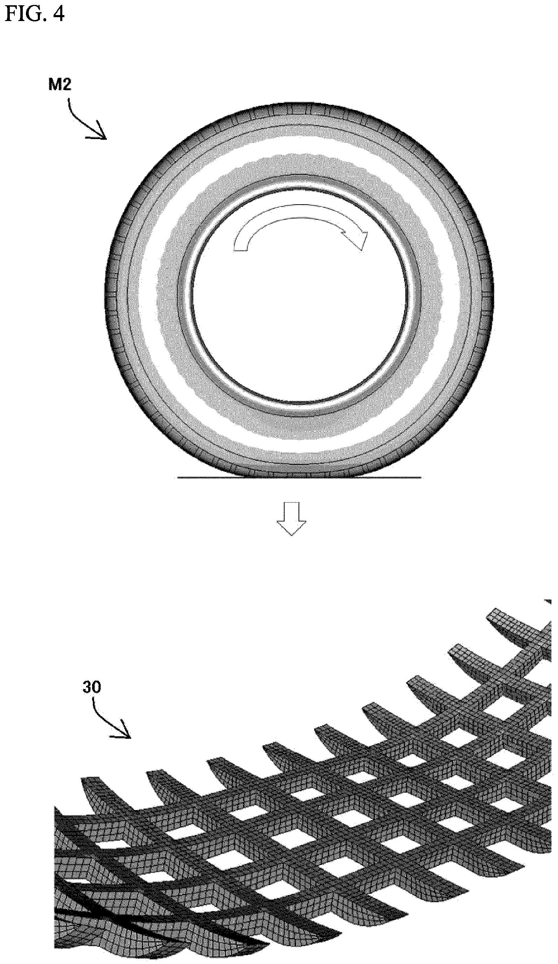

Structural calculator 12 shown in FIG. 1 causes model M2 in accordance with the tire finite element method that has groove space elements and which is stored in memory 11 to simulate rolling as shown in the upper portion of FIG. 4 pursuant to analytic conditions which include preestablished values for prescribed load, prescribed internal pressure, and prescribed rotational speed, and to carry out numeric operations for calculation of the deformation that would occur in accordance with model M2 due to contact with the road surface.

More specifically, tire model M2 simulates mounting on a rim, application of internal pressure, and rotation as it is pressed against the road surface. The lower portion of FIG. 4 is a drawing that shows only groove space elements 30. The deformations in accordance with model M2 include not only those at the exterior surface of the tire which includes the groove walls but also the deformations which occur at groove space elements 30.

As a result of this rolling analysis, the contact patch pressure arising due to contact with the road surface is calculated, and the deformation of the tire (grooves 20 and groove space elements 30) due to those pressure values as a function of time is calculated. Because this rolling analysis is known, detailed description thereof will be omitted.

Time series data acquirer 13 shown in FIG. 1 acquires time series data for deformations in accordance with the fluid analytic model employed in arithmetic operations for fluid analysis from the results of arithmetic operations for deformation in accordance with model M2. The data, which is data pertaining to displacements of group(s) of nodes including all of the nodes P1 that constitute the exterior surface of the tire including the grooves thereon, and at least a portion of all of the nodes P2 that constitute groove space elements 30, is data pertaining to displacements of respective nodes with passage of unit time(s) in accordance with the simulation.

The displacements of all of the nodes P1 that constitute the exterior surface of the tire include the movements in the positions thereof as a result of rotation, and all of the deformations thereof which occur as a result of contact with the ground made by the exterior surface of the tire including the side faces of the tire, the contact patch of the tire, and the groove wall surfaces. Stating this another way, the time series data is data indicating how the tire surface, including the grooves 20 thereon, moves.

In accordance with the present embodiment, data pertaining to displacements of all of the nodes P2 that constitute groove space elements 30 (interior nodes and surface nodes of groove space elements 30) is acquired. Of course, if the object of acquisition includes displacement information for at least a portion of all of the nodes P2 that constitute groove space elements 30, this will be effective because there will be an increase in the number of nodes.

In accordance with the present embodiment, time series data acquirer 13 has node coordinate acquirer 13a and has displacement vector calculator 13b. Node coordinate acquirer 13a acquires coordinates for the foregoing groups of nodes at regular unit time intervals from the results of arithmetic operations for deformation in accordance with model M2. Displacement vector calculator 13b calculates displacement vectors at regular unit time intervals based on coordinates before and after unit times for all nodes for which coordinate histories have been extracted. Displacement vectors are given by Formula (1) as follows.

$$\vec{V_t} = \left( V_{x,t}, \ V_{y,t}, V_{z,t} \right)$$
$$V_{x,t} = cood_{x,t+1} - cood_{x,t}$$
$$V_{y,t} = cood_{y,t+1} - cood_{y,t} \quad \dots \quad (1)$$
$$V_{z,t} = cood_{z,t+1} - cood_{z,t}$$

Here, V indicates a vector; t is a time step number indicating unit time; cood indicates coordinate; and x, y, and z respectively indicate the directional components thereof.

Note that whereas the time series data pertaining to displacements of nodes takes the form of the foregoing displacement vectors in the present embodiment, so long as it is data pertaining to displacements there is no limitation with respect thereto, there being any number of a wide variety of ways in which this may be expressed.

Fluid calculator 14 shown in FIG. 1 uses the fluid analytic model and the foregoing time series data to perform arithmetic operations for fluid analysis. More specifically, fluid calculator 14 uses the fluid analytic model to perform arithmetic operations for fluid analysis in which arithmetic operations are carried out with respect to the physical quantity of fluid for each computational mesh cell as the locations of the computational mesh cells are varied in such fashion that groups of nodes at the foregoing time series data are made to serve as control points.

Stating this another way, the physical quantity of fluid is calculated by using time series data indicating how the grooves and the tire surface move to perform calculations as computational mesh cells for calculating the behavior of the fluid are made to deform.

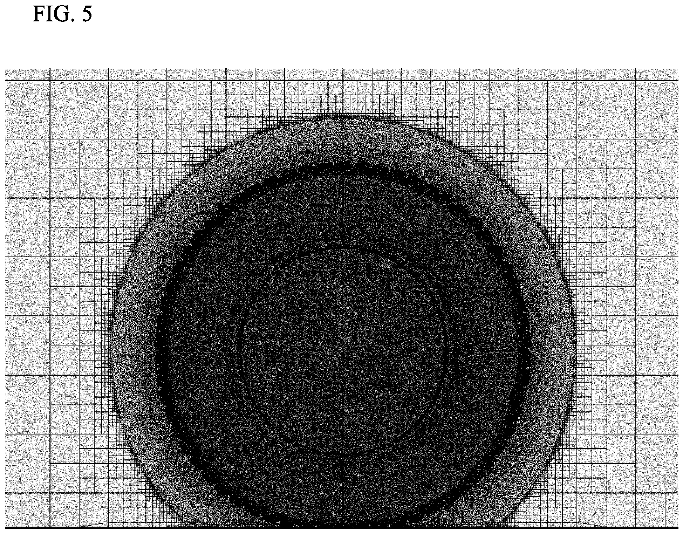

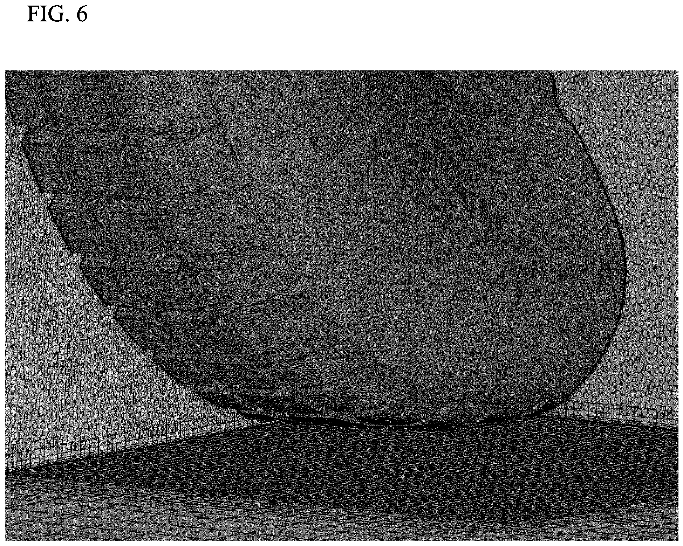

As shown in FIG. 5 and FIG. 6, a fluid analytic model in which the space around the tire which includes the exterior surface of the tire and the road surface is expressed as a plurality of computational mesh cells is employed. Shape of the tire surface in accordance with each fluid analytic model is created based on tire finite element method model M1 or M2, these being models for structural calculations.

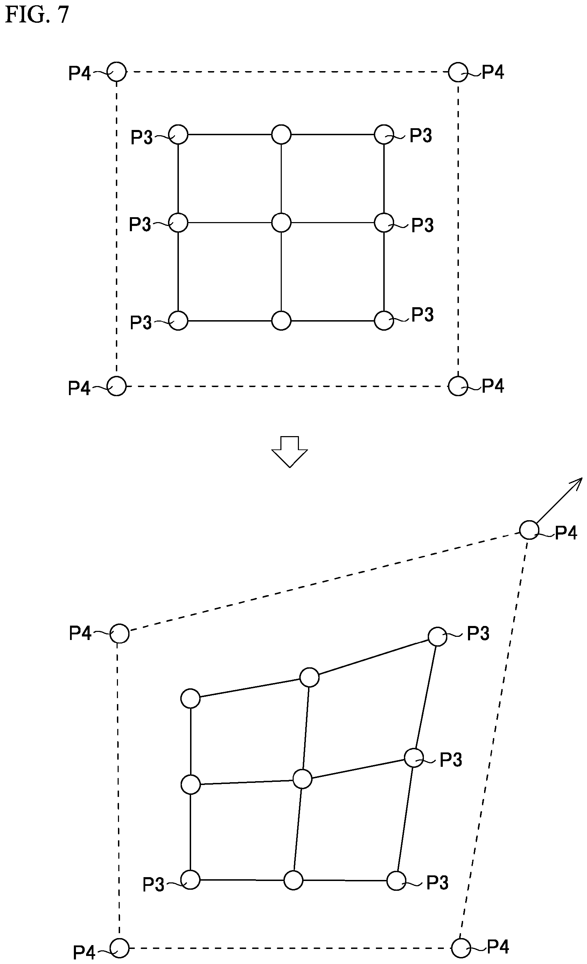

Whereas the overset mesh method is employed as the calculation technique in the present embodiment, other method(s) may be employed thereas. As illustrated in schematic fashion at FIG. 7, computational mesh cell deformation, i.e., mesh morphing, is such that control points P4 for control of deformation of computational mesh cells P3 are provided, being arranged in such fashion that the interpolation field (the region enclosed within the broken line in the drawing) formed by control points P4 surrounds computational mesh cells P3, computational mesh cells P3 in the interpolation field being made to deform in proportionate fashion as a result of displacement of control points P4.

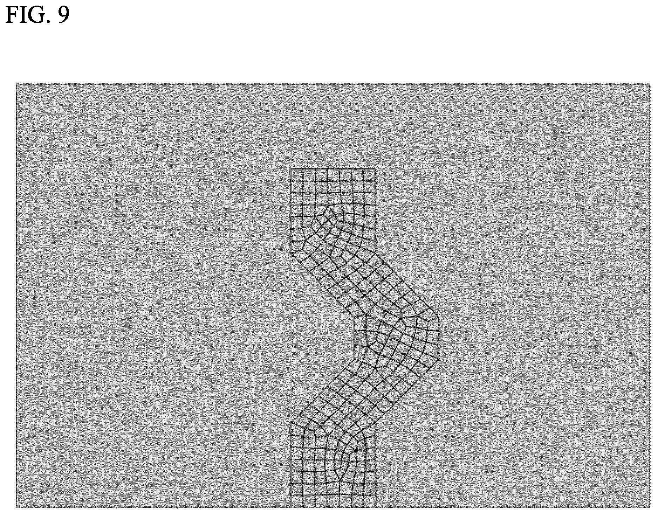

Benefits of the present invention will now be described. FIG. 9 is a drawing showing a computational mesh cells for groove spaces in a model for analyzing fluid before occurrence of deformation.

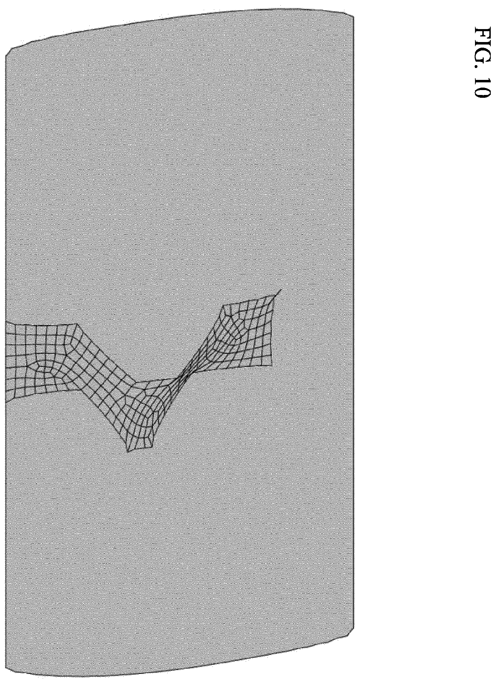

FIG. 10, which is an example of a situation in which groove space elements 30 are not used, is an example of deformation in a fluidic model employing displacement vectors at all of the nodes that constitute the tire exterior surface including groove wall surfaces. As can be understood by looking at the drawing, computational mesh cells have collapsed at locations where wall surfaces are mutually adjacent, causing the quality of the computational mesh to deteriorate.

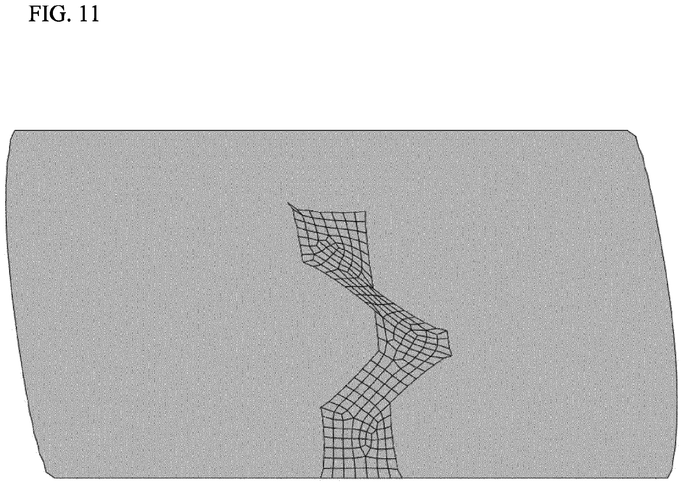

FIG. 11, which is an example of a situation in which groove space elements 30 are used, is an example of deformation in a fluidic model employing displacement vectors of element groups including not only all of the nodes that constitute the tire exterior surface including groove wall surfaces but also all of the nodes for the groove space elements 30. The fact that the quality of the computational mesh is maintained due to both the characteristics of groove space elements 30 and the fact that there are more control points can be understood by looking at the drawing.

Fluid Analytic Method

A method for using the foregoing apparatus 1 to analyze the fluid around a tire will now be described using FIG. 8.

First, at step S100, memory 11 stores model M2 in accordance with a tire finite element method, model M2 in accordance with the tire finite element method being such that a tire is represented by a plurality of elements and nodes, and being such that this has grooves 20 formed at the contact patch, and has groove space elements 30 arranged in groove spaces bounded by groove wall surfaces that form grooves 20.

Next, at step S101, structural calculator 12 causes model M2 in accordance with the tire finite element method to simulate rolling pursuant to analytic conditions which include prescribed load, prescribed internal pressure, and prescribed rotational speed, and to carry out numeric operations for calculation of the deformation that would occur in accordance with the model due to contact with the road surface.

Next, at step S102, time series data acquirer 13 acquires time series data pertaining to displacements of node groups (P1, P2) including all of the nodes P1 that constitute the exterior surface of the tire including the grooves thereon, and at least a portion of all of the nodes P2 that constitute groove space elements 30, from the results of arithmetic operations for deformation in accordance with the model.

Next, at step S103, fluid calculator 14 is such that a fluid analytic model in which the space around the tire which includes the exterior surface of the tire and the road surface is expressed as a plurality of computational mesh cells is used to perform arithmetic operations for fluid analysis in which arithmetic operations are carried out with respect to the physical quantity of fluid for each computational mesh cell as the locations of the computational mesh cells are varied in such fashion that node groups (P1, P2) in the time series data are made to serve as control points.

As described above, a method for analyzing fluid around a tire in accordance with the present embodiment is a method executed by a computer, and including:

a step (S100) in which a model M2 in accordance with a tire finite element method is stored in memory 11, the model M2 in accordance with the tire finite element method being such that a tire is represented by a plurality of elements and nodes, and having grooves 20 formed at a contact patch, and having groove space elements 30 arranged in groove spaces bounded by groove wall surfaces 21 that form the grooves 20;

a step (S101) in which the model M2 in accordance with the tire finite element method is made to simulate rolling pursuant to analytic conditions which include prescribed load, prescribed internal pressure, and prescribed rotational speed, and numeric operations for calculation of the deformation that would occur in accordance with the model due to contact with the road surface are carried out;

a step (S102) in which time series data pertaining to displacements of node groups (P1, P2) including all nodes P1 that constitute an exterior surface of the tire including the grooves thereon, and at least a portion of all nodes P2 that constitute the groove space elements 30, is acquired from results of arithmetic operations for deformation in accordance with the model; and

a step (S103) in which a fluid analytic model in which space around the tire which includes the exterior surface of the tire and the road surface is expressed as a plurality of computational meshes is used to perform arithmetic operations for fluid analysis in which arithmetic operations are carried out with respect to a physical quantity of fluid for each of the computational meshes as locations of the computational meshes are varied in such fashion that the node groups in the time series data are made to serve as control points.

An apparatus 1 for analyzing fluid around a tire in accordance with the present embodiment has a memory 11 that stores a model M2 in accordance with a tire finite element method, the model M2 in accordance with the tire finite element method being such that a tire is represented by a plurality of elements and nodes, and having grooves 20 formed at a contact patch, and having groove space elements 30 arranged in groove spaces bounded by groove wall surfaces 21 that form the grooves 20;

a structural calculator 12 that causes the model M2 in accordance with the tire finite element method to simulate rolling pursuant to analytic conditions which include prescribed load, prescribed internal pressure, and prescribed rotational speed, and to carry out numeric operations for calculation of the deformation that would occur in accordance with the model due to contact with the road surface;

a time series data acquirer 13 that causes time series data pertaining to displacements of node groups (P1, P2) including all nodes P1 that constitute an exterior surface of the tire including the grooves thereon, and at least a portion of all nodes P2 that constitute the groove space elements 30, to be acquired from results of arithmetic operations for deformation in accordance with the model; and

a fluid calculator 14 that causes a fluid analytic model in which space around the tire which includes the exterior surface of the tire and the road surface is expressed as a plurality of computational mesh cells to be used to perform arithmetic operations for fluid analysis in which arithmetic operations are carried out with respect to a physical quantity of fluid for each of the computational mesh cells as locations of the computational mesh cells are varied in such fashion that the node groups (P1, P2) in the time series data are made to serve as control points.

By so doing, because it will be possible to cause not only all of the nodes P1 that constitute the tire exterior surface but also node(s) P2 for groove space element(s) 30 to be utilized as control points for mesh morphing processing in which locations of computational mesh cells are varied, even where there is complex deformation of grooves of the sort such as would cause deterioration in the quality of the computational mesh were only nodes P1 for groove walls used, it will be possible due to the fact that more control points are used to satisfactorily generate the spatial interpolation field and to prevent deterioration in the quality of the computational mesh for mesh morphing processing. This will therefore make it possible to suppress occurrence of situations in which fluid analysis quality deteriorates and calculations fail.

In accordance with the present embodiment, the node groups include all nodes P2 that constitute the groove space elements 30.

By so doing, because it will be possible for all of the node(s) P2 that are present at groove space(s) to be used as control point(s), it will be possible due to the fact that there are more control points to better generate the spatial interpolation field and prevent deterioration in the quality of the computational mesh for mesh morphing processing. This will therefore make it possible to better suppress occurrence of situations in which fluid analysis quality deteriorates and calculations fail.

In accordance with the present embodiment, Young's modulus of the groove space elements is chosen so as to be not less than 1/1000th but not greater than 1/10000th of Young's modulus chosen for elements that form the contact patch, and Poisson's ratio of the groove space elements is chosen so as to be $0 \pm 0.01$.

Thus, by establishing groove space element(s) 30, it will be possible, even where groove(s) deform in complex fashion as a result of contact with the road surface, to cause groove space element(s) 30 to deform in such fashion as to not impede groove deformation but to conform to groove deformation, making it possible to calculate tire deformation with high precision.

An apparatus for analyzing fluid around a tire in accordance with the present embodiment has: a processor 15 and a memory 11 for storing instructions capable of being executed by the processor 15. The processor 15 is constituted in such fashion as to cause

a model in accordance with a tire finite element method to be stored in the memory, the model in accordance with the tire finite element method being such that a tire is represented by a plurality of elements and nodes, and having grooves formed at a contact patch, and having groove space elements arranged in groove spaces bounded by groove wall surfaces that form the grooves; the model in accordance with the tire finite element method to be made to simulate rolling pursuant to analytic conditions which include prescribed load, prescribed internal pressure, and prescribed rotational speed, and to carry out numeric operations for calculation of the deformation that would occur in accordance with the model due to contact with the road surface;

time series data pertaining to displacements of node groups including all nodes that constitute an exterior surface of the tire including the grooves thereon, and at least a portion of all nodes that constitute the groove space elements, to be acquired from results of arithmetic operations for deformation in accordance with the model; and a fluid analytic model in which space around the tire which includes the exterior surface of the tire and the road surface is expressed as a plurality of computational mesh cells to be used to perform arithmetic operations for fluid analysis in which arithmetic operations are carried out with respect to a physical quantity of fluid for each of the computational mesh cells as locations of the computational mesh cells are varied in such fashion that the node groups in the time series data are made to serve as control points.

Processor 15 may be implemented by one or more application specific integrated circuits(s) (ASIC), digital signal processor(s) (DSP), digital signal processing device(s) (DSPD), programmable logic device(s) (PLD), field programmable gate array(s) (FPGA), controller(s), microcontroller(s), microprocessor(s), and/or or other such electronic component(s).

Program(s) associated with the present embodiment are program(s) for causing the foregoing method(s) to be executed by computer(s).

The operation and effects provided by the foregoing method(s) can also be obtained as a result of execution of such program(s).

While embodiments in accordance with the present disclosure have been described above with reference to the drawings, it should be understood that the specific constitution thereof is not limited to these embodiments. The scope of the present disclosure is as indicated by the claims and not merely as described at the foregoing embodiments, and moreover includes all variations within the scope of or equivalent in meaning to that which is recited in the claims.

Structure employed at any of the foregoing embodiment(s) may be employed as desired at any other embodiment(s). The specific constitution of the various components is not limited only to the foregoing embodiment(s) but admits of any number of variations without departing from the gist of the present disclosure.

EXPLANATION OF REFERENCE NUMERALS

| | |
|---|---|
| 1 | Fluid analysis apparatus |
| 10 | Model generator |
| 11 | Memory |
| 12 | Structural calculator |
| 13 | Time series data acquirer |
| 13a | Node coordinate acquirer |

13b  Displacement vector calculator
14   Fluid calculator
15   Processor
20   Groove
30   Groove space element
M2   Model in accordance with tire finite element method

**Claims**

1. A method for analyzing fluid around a tire comprising:

   a step in which a model in accordance with a tire finite element method is stored in memory, the model in accordance with the tire finite element method being such that a tire is represented by a plurality of elements and nodes, and having grooves formed at a contact patch, and having groove space elements arranged in groove spaces bounded by groove wall surfaces that form the grooves;
   a step in which the model in accordance with the tire finite element method is made to simulate rolling pursuant to analytic conditions which include prescribed load, prescribed internal pressure, and prescribed rotational speed, and numeric operations for calculation of the deformation that would occur in accordance with the model due to contact with the road surface are carried out;
   a step in which time series data pertaining to displacements of node groups including all nodes that constitute an exterior surface of the tire including the grooves thereon, and at least a portion of all nodes that constitute the groove space elements, is acquired from results of arithmetic operations for deformation in accordance with the model; and
   a step in which a fluid analytic model in which space around the tire which includes the exterior surface of the tire and the road surface is expressed as a plurality of computational mesh cells is used to perform arithmetic operations for fluid analysis in which arithmetic operations are carried out with respect to a physical quantity of fluid for each of the computational mesh cells as locations of the computational mesh cells are varied in such fashion that the node groups in the time series data are made to serve as control points.

2. The method according to claim 1, wherein the node groups include all nodes that constitute the groove space elements.

3. The method according to claim 1 or 2, wherein Young's modulus of the groove space elements is chosen so as to be not less than 1/1000th but not greater than 1/10000th of Young's modulus chosen for elements that form the contact patch, and Poisson's ratio of the groove space elements is chosen so as to be $0 \pm 0.01$.

4. An apparatus for analyzing fluid around a tire comprising:

   a memory that stores a model in accordance with a tire finite element method, the model in accordance with the tire finite element method being such that a tire is represented by a plurality of elements and nodes, and having grooves formed at a contact patch, and having groove space elements arranged in groove spaces bounded by groove wall surfaces that form the grooves;
   a structural calculator that causes the model in accordance with the tire finite element method to simulate rolling pursuant to analytic conditions which include prescribed load, prescribed internal pressure, and prescribed rotational speed, and to carry out numeric operations for calculation of the deformation that would occur in accordance with the model due to contact with the road surface;
   a time series data acquirer that causes time series data pertaining to displacements of node groups including all nodes that constitute an exterior surface of the tire including the grooves thereon, and at least a portion of all nodes that constitute the groove space elements, to be acquired from results of arithmetic operations for deformation in accordance with the model; and
   a fluid calculator that causes a fluid analytic model in which space around the tire which includes the exterior surface of the tire and the road surface is expressed as a plurality of computational mesh cells to be used to perform arithmetic operations for fluid analysis in which arithmetic operations are carried out with respect to a physical quantity of fluid for each of the computational mesh cells as locations of the computational mesh cells are varied in such fashion that the node groups in the time series data are made to serve as control points.

5. The apparatus according to claim 4, wherein the node groups include all nodes that constitute the groove space elements.

6. The apparatus according to claim 4 or 5, wherein Young's modulus of the groove space elements is chosen so as to be not less than 1/1000th but not greater than 1/10000th of Young's modulus chosen for elements that form the contact patch, and Poisson's ratio of the groove space elements is chosen so as to be $0 \pm 0.01$.

7. An apparatus for analyzing fluid around a tire comprising:

a processor; and
a memory for storing instructions capable of being executed by the processor;
wherein the processor is constituted in such fashion as to cause
a model in accordance with a tire finite element method to be stored in the memory, the model in accordance with the tire finite element method being such that a tire is represented by a plurality of elements and nodes, and having grooves formed at a contact patch, and having groove space elements arranged in groove spaces bounded by groove wall surfaces that form the grooves;
the model in accordance with the tire finite element method to be made to simulate rolling pursuant to analytic conditions which include prescribed load, prescribed internal pressure, and prescribed rotational speed, and to carry out numeric operations for calculation of the deformation that would occur in accordance with the model due to contact with the road surface;
time series data pertaining to displacements of node groups including all nodes that constitute an exterior surface of the tire including the grooves thereon, and at least a portion of all nodes that constitute the groove space elements, to be acquired from results of arithmetic operations for deformation in accordance with the model; and
a fluid analytic model in which space around the tire which includes the exterior surface of the tire and the road surface is expressed as a plurality of computational mesh cells to be used to perform arithmetic operations for fluid analysis in which arithmetic operations are carried out with respect to a physical quantity of fluid for each of the computational mesh cells as locations of the computational mesh cells are varied in such fashion that the node groups in the time series data are made to serve as control points.

## FIG. 1

Model in accordance with tire finite element method ⌐M1

Fluid analysis apparatus (computer)

**11**

Memory M2

Model in accordance with tire finite element method that has groove space elements

Model generator ⌐10

Structural calculator ⌐12

Time series data acquirer ⌐13

Node coordinate acquirer ⌐13a

Displacement vector calculator ⌐13b

Fluid calculator ⌐14

**15**

**1**

FIG. 2A

M1

20

20

FIG. 2B

FIG. 3

P1

P1

21

P1

20

○ ··· P1

P1

P1

21

P1

P2

20

30

○ ··· P1

△ ··· P2

FIG. 4

M2

30

FIG. 5

FIG. 6

FIG. 7

FIG. 8

```
                    ┌─────────────────────────┐
                    │         START           │
                    └─────────────────────────┘
                                 │
                                 ▼
        ┌───────────────────────────────────────────┐
        │ Store model M2 in accordance with tire    │  ～S100
        │ finite element methodthat has groove      │
        │ space elements                            │
        └───────────────────────────────────────────┘
                                 │
                                 ▼
        ┌───────────────────────────────────────────┐
        │         Analysis of rolling while         │  ～S101
        │          in contact with the ground       │
        └───────────────────────────────────────────┘
                                 │
                                 ▼
        ┌───────────────────────────────────────────┐
        │   Acquire time series data pertaining to  │  ～S102
        │   displacements of node groups including  │
        │   at least a portion of all nodes at      │
        │   groove space elements                   │
        └───────────────────────────────────────────┘
                                 │
                                 ▼
        ┌───────────────────────────────────────────┐
        │ Use fluid analytic model to perform       │  ～S103
        │ arithmetic operations for fluid analysis  │
        │ in which node groups in time series       │
        │ data are made to serve as control points  │
        └───────────────────────────────────────────┘
                                 │
                                 ▼
                    ┌─────────────────────────┐
                    │          END            │
                    └─────────────────────────┘
```

FIG. 9

FIG. 10

FIG. 11

## INTERNATIONAL SEARCH REPORT

| | International application No. |
|---|---|
| | PCT/JP2018/015673 |

### A. CLASSIFICATION OF SUBJECT MATTER
Int.Cl. B60C19/00(2006.01)i, G06F17/50(2006.01)i

According to International Patent Classification (IPC) or to both national classification and IPC

### B. FIELDS SEARCHED

Minimum documentation searched (classification system followed by classification symbols)
Int.Cl. B60C19/00, B60C99/00, G06F17/50, G01M17/02

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2011-204157 A (BRIDGESTONE CORPORATION) 13 October 2011, claims, paragraphs [0001], [0005]-[0008], [0019]-[0065], fig. 1-7 (Family: none) | 1-7 |
| Y | JP 2016-99273 A (TOYO TIRE AND RUBBER CO., LTD.) 30 May 2016, claims, paragraphs [0001]-[0007], [0015]-[0037], fig. 2, 3, 6, 8 (Family: none) | 1-7 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 July 2018 (04.07.2018) | 17 July 2018 (17.07.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/015673 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2009-161115 A (SUMITOMO RUBBER INDUSTRIES, LTD.) 23 July 2009, claims, paragraphs [0001], [0015]-[0048], fig. 2-15 & US 2010/0305746 A1, claims, paragraphs [0001], [0040]-[0073], fig. 2-15 & WO 2009/087803 A1 & EP 2241456 A1 & KR 10-2010-0100877 A & CN 101909909 A | 1-7 |
| A | JP 2016-60381 A (TOYO TIRE AND RUBBER CO., LTD.) 25 April 2016, entire text, all drawings (Family: none) | 1-7 |
| A | US 2013/0103374 A1 (SOTGIU, Paolo) 25 April 2013, entire text, all drawings (Family: none) | 1-7 |

Form PCT/ISA/210 (continuation of second sheet) (January 2015)

**INTERNATIONAL SEARCH REPORT**

International application No.

PCT/JP2018/015673

<Claims 3 and 6>

Claims 3 and 6 mention that "the Young's modulus of a groove space element is set to be at least 1/1000 and at most 1/10000 of the Young's modulus set for an element forming a ground surface".

However, since "1/10000" is a smaller value than "1/1000", the above text is mathematically contradictory and ambiguous.

Thus, claims 3 and 6 do not comply with the requirements for clarity under the provision of PCT Article 6.

Therefore, the examination was carried out considering the above text to be an erroneous wording of what was intended to be "the Young's modulus of a groove space element is set to be at least 1/10000 and at most 1/1000 of the Young's modulus set for an element forming a ground surface".

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013216269 A

- JP 2012006522 A